# EUROPÄISCHE PATENTSCHRIFT

(11) **EP 2 057 011 B1**
(45) Veröffentlichungstag und Bekanntmachung des Hinweises auf die Patenterteilung: **13.10.2010**
(21) Anmeldenummer: 07802539.2
(22) Anmeldetag: 08.08.2007
(51) Int. Cl.: B32B 21/02, B44C 5/04, E04F 15/02

(54) **FUSSBODENPANEEL AUS MDF ODER HDF**
FLOOR PANEL MADE OF MDF OR HDF
PANNEAU POUR PLANCHER EN MDF OU EN HDF

(30) Priorität: 10.08.2006 DE 102006037416
(43) Veröffentlichungstag der Anmeldung: 13.05.2009
(73) Patentinhaber: BASF SE, 67056 Ludwigshafen (DE)
(72) Erfinder: KRÜSEMANN, Juliane, 67069 Ludwigshafen (DE); LUNKWITZ, Ralph, 67434 Neustadt (DE)
(74) Vertreter: Ellwanger, Arndt
(86) Internationale Anmeldenummer: PCT/EP2007/058234
(87) Internationale Veröffentlichungsnummer: WO 2008/017689

(56) Entgegenhaltungen:
- DE-A1- 3 117 605
- US-A- 5 827 592

## Beschreibung

Die vorliegende Erfindung betrifft die Verwendung von MDF oder HDF zur Herstellung eines Fußboden-Paneels, das einen Kern aus MDF oder HDF, einen Gegenzug und gegebenenfalls eine Schutzschicht enthält, wobei auf die sonst bei Bodenbelägen aus Laminat übliche Dekorschicht verzichtet wird und der Kern aus HDF oder MDF mindestens ein Pigment und bezogen auf das Pigment 0,5 bis 10 Gew.-% Farbstoff enthält. Weiterhin betrifft die vorliegende Erfindung Fußboden-Paneele, die unter der erfindungsgemäßen Verwendung von MDF oder HDF hergestellt werden sowie Fußbodenbeläge, die die erfindungsgemäßen Fußboden-Paneele enthalten.

Im Bereich der Fußbodenbeläge erfreuen sich Holzböden und holzähnliche Fußbodenbeläge immer größerer Beliebtheit. Insbesondere die Einführung der sogenannten Click-Verbindung, durch die sich beispielsweise Laminat und Fertigparkett ohne großen zeitlichen und apparativen Aufwand verlegen lassen, hat zu einer weiten Verbreitung dieser Art von Bodenbelägen geführt. Die kostengünstigste Variante ist im Allgemeinen Laminat.

Laminat besteht üblicherweise aus vier Schichten, einem Kern aus HDF oder MDF, einer Gegenzugschicht auf der Unterseite, einem Dekorpapier auf der Oberseite sowie einem sogenannten Overlay, bei dem es sich um eine widerstandsfähige Spezialbeschichtung handelt. Als Dekorpapiere werden bedrucktes Papier, überwiegend mit Holzstrukturnachahmungen wie zum Beispiel Buche oder Ahorn versehen, oder auch unifarben bedruckte Beschichtungswerkstoffe verwendet. Das bedruckte Papier wird mit Melaminharz getränkt und zusammen mit dem Overlay und ebenfalls harzgetränktem Gegenzugpapier unter Hitze und Druck auf mit dem Kern verpresst. Bei der Direktbeschichtung werden die vier Lagen - Gegenzug, Kern, Dekorpapier und Overlay - in einem Schritt verpresst.

Auf dem Markt erhältlich sind Laminat-Paneele, die einen gefärbten Kern besitzen, der zur Kennzeichnung der Feuchtebeständigkeit dient. Die Paneele sind ebenfalls mit einem Dekorpapier ausgestattet, der gefärbte Kern ist nach Verlegung nicht sichtbar.

Trotz der durch das bedruckte Dekorpapier hervorgerufenen Holzoptik unterscheidet sich Laminat von Echtholz als Bodenbelag, beispielsweise in der Haptik oder der elektrostatischen Aufladung. Dieser Unterschied zeigt sich auch bei Beschädigung des Bodenbelags. Wenn diese nicht nur oberflächlich ist, sondern die unter der Schutzschicht liegende Dekorschicht betrifft, lässt sich der Schaden praktisch nicht mehr beheben, es sei denn, der betreffend Teil wird vollständig ausgetauscht.

Aufgabe der vorliegenden Erfindung ist ein einfach zu verlegender Bodenbelag, der echtem Holz in der Verarbeitung möglichst nahe kommt, haptisch einen ähnlichen Eindruck wie echtes Holz hinterlässt und der gegenüber Beschädigungen der Oberfläche tolerant ist, d.h., Beschädigungen sollen nicht sofort augenfällig sein und nach Möglichkeit ohne Auswechseln zu beheben. Dabei sollen die Kosten diejenigen herkömmlicher Bodenbeläge nicht übersteigen.

Die Aufgabe wird gelöst durch Verwendung von HDF oder MDF zur Herstellung eines Fußboden-Paneels, das an einer Längs- und einer Querseite mit einer Nut und an der jeweils gegenüberliegenden Längs- und Querseite mit einer zu der Nut passenden Feder versehen ist, enthaltend
- A: einen Kern aus HDF oder MDF, der mindestens ein Pigment und bezogen auf das Pigment 0,5 bis 10 Gew.-% Farbstoff enthält, und
- B: eine Gegenzugschicht auf der Unterseite,
wobei das Vorhandensein einer Dekorschicht, die dem Fußboden-Paneel in Form eines bedruckten oder gefärbten Papiers oder Beschichtungswerkstoffes zugefügt wird, ausgeschlossen ist.

Gemäß einer bevorzugten Ausführungsform der Erfindung ist vorzugsweise das Vorhandensein jeglicher dekorativen Schicht ausgeschlossen. Auch das Aufbringen einer Dekorschicht durch vollständiges Bedrucken des Kerns, in der Weise, dass der Kern vollständig abgedeckt wird, ist gemäß der vorliegenden Erfindung vorzugsweise ausgeschlossen.

In einer weiteren bevorzugten Ausführungsform ist das als Kern A verwendete HDF oder MDF gefärbt.

Ebenfalls bevorzugt ist eine Ausführungsform, in der das Fußbodenpaneel eine transparente Schutzschicht C auf der Oberseite des Paneels enthält.

HDF und MDF sind Holzwerkstoffe, die eine sehr homogene Struktur in allen drei Dimensionen besitzen und dadurch bedingt gut verarbeitbar und optisch sehr einheitlich sind. MDF und HDF können wie echtes Holz bearbeitet werden, beispielsweise durch Sägen, Fräsen, Bohren; wie bei echtem Holz können Kanten und Profile eingearbeitet werden. Sie besitzen mechanische Eigenschaften, die echtem Holz sehr ähnlich sind.

Besonders vorteilhaft ist der Verzicht auf die Dekorschicht. Die Oberfläche der erfindungsgemäßen Boden-Paneele wird von der Struktur und den Eigenschaften der als Kern A verwendeten MDF- und HDF-Platten beziehungsweise der gegebenenfalls aufgebrachten Schutzschicht C bestimmt. Die erfindungsgemäßen Boden-Paneele sind Holz somit haptisch sehr viel ähnlicher als herkömmliches Laminat. Diese erfindungsgemäßen HDF- und MDF-haltigen Boden-Paneele lassen sich wie Parkett durch Wachsen oder Lackieren oberflächenbehandeln. Da der MDF- bzw. HDF-Kern diese sehr homogene Struktur aufweist, die Oberfläche sich also nicht von den darunter liegenden Schichten unterscheidet - im Gegensatz zu herkömmlichen Laminat mit einer Dekorschicht - fallen Beschädigungen der Oberfläche bei den erfindungsgemäßen Boden-Paneelen kaum auf und können wie bei Holz leicht behoben werden. Die homogene Struktur des MDFs bzw. HDFs führt auch dazu, dass den erfindungsgemäßen Boden-Paneelen sehr leicht eine dreidimensionale Struktur, beispielsweise durch Fräsen oder Prägen gegeben werden kann. Durch den Verzicht auf die Dekorschicht ergibt sich ein Kostenvorteil bei der Herstellung der erfindungsgemäßen Boden-Paneele.

Durch die Verwendung von gefärbtem MDF oder HDF als Kern A eröffnen sich vielfältige neue Möglichkeiten der ästhetischen Gestaltung von Fußböden durch die erfindungsgemäßen Boden-Paneele. So lassen sich Paneele unterschiedlicher Farbtöne kombinieren, durch geeignete Wahl der farbgebenden Komponenten lassen sich aber auch interessante farbliche Variationen erzielen wie marmorierte Paneele.

Die große Vielfalt an Farben und Effekten der erfindungsgemäßen Fußboden-Paneele ermöglicht eine individuelle Gestaltung des Fußbodens. Da die erfindungsgemäßen Fußboden-Paneele mit Nut und Feder versehen sind, lassen sie sich leicht verlegen und leicht entfernen und können an einem anderen Ort erneut verlegt werden.

Bei den Boden-Paneelen gemäß der vorliegenden Erfindung ist das Vorhandensein einer Dekorschicht, wie sie im Handel erhältliches Laminat üblicherweise aufweist, ausgeschlossen. Bei handelsüblichem Laminat dient die Dekorschicht dazu, den tatsächlichen Kern des Bodenbelags, der aus HDF oder MDF besteht, zu kaschieren und dem Fußboden beispielsweise durch Imitation von Kacheln, Fliesen, Parkett oder Holzdielen ein völlig andersartiges Aussehen zu verleihen. Diese Dekorschicht wird in der Regel in Form von harzgetränktem Papier oder einem anderen Beschichtungswerkstoff, auf den beispielsweise durch Drucken oder Färben ein Dekor aufgebracht wurde, beim Herstellungsprozess in das Laminat eingeführt. Ein weiteres Verfahren zum Aufbringen der Dekorschicht ist das direkte Bedrucken des Kerns, der dabei vollständig bedruckt wird, so dass der Kern vollständig abgedeckt wird. Im Rahmen der vorliegenden Erfindung gelten übliche, dem Fachmann bekannte, zur Veredelung und zum Oberflächenschutz von Holz beziehungsweise Holzwerkstoffen eingesetzte Verfahren wie Lackieren mit transparenten Lacken, Ölen, Wachsen, Polieren, Lasieren und Beizen nicht als Dekorschicht. Bei diesen Verfahren werden zumindest teilweise transparente Schichten aufgetragen, die die Charakteristika des behandelten Untergrundes wie z.B. die Maserung nicht völlig überdecken. Ebenso zählt eine durch Verfahren zur dreidimensionalen Strukturierung von Oberflächen wie Fräsen, Prägen, Embossing oder das CNC-Verfahren veränderte Oberfläche nicht als Dekorschicht im Sinne der vorliegenden Anmeldung.

Erfindungsgemäß wird zur Herstellung der Boden-Paneele HDF (Hochdichte Faserplatte) oder MDF (Mitteldichte Faserplatte) als Kern A verwendet. Dabei handelt es sich um Holzfaserstoffe, die durch Verpressen bei erhöhten Temperaturen von mit Bindemitteln gemischten Holzfasern hergestellt werden.

Die Holzfasern werden aus verschiedenen, dem Fachmann bekannten Rohstoffen hergestellt, beispielsweise Hackschnitzel aus rindenfreiem Nadelholz. Nach verschiedenen Aufschluss- und Zerkleinerungsschritten werden die Fasern in einem sogenannten Refiner fein gemahlen. Die dabei erhaltenen Holzfasern werden in einer sogenannten Blowline getrocknet. Zur Herstellung der Faserplatten müssen die Holzfasern mit dem Bindemittel gemischt werden. Diese Beleimung kann in der Blowline stattfinden, die beleimten Fasern durchlaufen anschließend einen Trockner, indem sie auf Restfeuchten von 7 bis 13 % getrocknet werden. Die Fasern können auch nach ihrer Trocknung in der Blowline in speziellen Mischern beleimt werden. Auch Kombinationen von Blowline und Mischer sind möglich.

Die Holzfasern können vor oder während der Herstellung der Holzfaserplatten gebleicht werden.

Bei der chemischen Bleiche von Holzfasern werden die färbenden Begleitstoffe des Holzes durch oxidierende oder/und reduzierende Chemikalien zerstört oder unwirksam gemacht. Für die oxidative Bleiche eignen sich z.B. Wasserstoffperoxid, Ozon, Sauerstoff, Salze von Halogensauerstoffsäuren wie Chlorite und Salze organischer und anorganischer Persäuren, wie Peracetate, Percarbonate und Perborate, vor allem deren Alkalimetallsalze, insbesondere Natriumsalze, wobei die Percarbonate und Wasserstoffperoxid bevorzugt sind. Für die reduktive Bleiche sind z.B. reduzierende Schwefelverbindungen, wie Dithionite, Disulfite, Sulfite bzw. Schwefeldioxid, Sulfinsäuren und deren Salze, insbesondere die Alkalimetallsalze und vor allem die Natriumsalze, und Hydroxycarbonsäuren, wie Zitronensäure und Äpfelsäure, geeignet. Bevorzugte Reduktionsmittel sind die Disulfite und Sulfite, insbesondere Natriumhydrogensulfit, sowie Apfel- und Zitronensäure.

Verfahrenstechnisch geht man beim Bleichen zweckmäßigerweise so vor, dass man wässrige, 5 bis 40 gew.-%ige Holzfaserdispersionen kontinuierlich in Gegenstromtürmen bei Temperaturen von 90 bis 150°C und Drücken bis zu 3 bar mit wässrigen Lösungen oder Dispersionen der Bleichmittel behandelt. Üblichweise wird in Gegenwart von Komplexbildnern, wie EDTA, gearbeitet, um den Abbau der Bleichmittel durch Übergangsmetallionen zu vermeiden.

Gemäß der vorliegenden Erfindung werden zur Herstellung der Holzfaserplatten Holzfasern, die zunächst oxidativ und dann reduktiv gebleicht worden sind, bevorzugt verwendet.

Ganz besonders bevorzugt wird die oxidative Bleiche dabei mit Percarbonaten oder Wasserstoffperoxid und die reduktive Bleiche mit Sulfiten oder Apfel- oder Zitronensäure durchgeführt.

Vorteilhaft wird die Bleichung der Fasern während der Plattenherstellung vorgenommen. Die Bleichmittel können dazu während der Aufschluss- und Zerkleinerungsschritte im Vorerwärmer oder im Kocher zu den Hackschnitzeln gegeben werden. Vorzugsweise werden auch Komplexbildner zugesetzt.

Zur Fertigstellung der Platten werden die beleimten Späne beziehungsweise Fasern dann zu Matten geschüttet, gewünschtenfalls kalt vorverdichtet und in beheizten Pressen bei Temperaturen von 170 bis 240 °C zu Platten verpresst.

Als Bindemittel können Aminoplaste wie Harnstoff- und Harnstoff-Melamin-Formaldehydharze, aber auch Isocyanate, beispielsweise Diphenylmethan-4-4'-diixocyanat (MDI) eingesetzt werden.

Gemäß der vorliegenden Erfindung wird MDF mit einer Dichte von 600 bis 850 kg/m³ und HDF mit einer Dichte von 800 bis 1100 kg/m³ verwendet. Bevorzugt wird gemäß dieser Erfindung HDF als Material für den Kern A verwendet.

Die als Kern A verwendeten MDF- und HDF-Platten können nach der Herstellung noch durch dem Fachmann bekannte üblichen Verfahren wie beispielsweise Schleifen behandelt werden.

Gemäß der Erfindung ist das als Kern A des Boden-Paneels verwendete HDF oder MDF gefärbt. Bevorzugt geschieht die Färbung durch Zugabe von mindestens einer farbgebenden Komponente bei der Herstellung der Holzfaserplatten. Die mindestens eine farbgebende Komponente liegt in der Holzfaserplatte bevorzugt in einer Konzentration von 0,001 bis 20 Gew.-%, bezogen auf atro Faser (absolutes Trockengewicht der Faser), besonders bevorzugt 0,01 bis 10 Gew.-% vor, jeweils bezogen auf atro Faser.

Die farbgebenden Komponenten können bei der Faserplattenpräduktion entweder dem Bindemittel zugegeben oder getrennt von diesem vor oder nach der Beleimung auf die Fasern aufgebracht werden oder mit den Fasern vermischt werden.

Gemäß der Erfindung enthält das als Kern A verwendete HDF oder MDF als farbgebende Komponente mindestens ein Pigment und bezogen auf das Pigment 0,1 bis 10 Gew.-% mindestens eines Farbstoffs.

Es können organische und anorganische Pigmente sowie Mischungen aus organischen und anorganischen Pigmenten verwendet werden.

Die Pigmente liegen bevorzugt in feinteiliger Form vor. Die Pigmente haben dementsprechend üblicherweise mittlere Teilchengrößen von 0,1 bis 5 µm, insbesondere 0,1 bis 3 µm und vor allem 0,1 bis 1 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente sein.

Im Folgenden seien als Beispiele für geeignete organische Farbpigmente genannt:
Monoazopigmente, Disazopigmente, Disazokondensationspigmente, Anthanthronpigmente, Anthrachinonpigmente, Anthrapyrimidinpigmente, Chinacridonpigmente, Chinophthalonpigmente, Diketopyrrolopyrrolpimgente, Dioxazinpigmente, Flavanthronpigmente, Indanthronpigmente, Isoindolinpigmente, Isoindolinonpigmente, Isoviolanthronpigmente, Metallkomplexpigmente, Perinonpigmente, Perylenpigmente, Phthalocyaninpigmente, Pyranthronpigmente, Pyrazolochinazolonpigmente, Thioindigopigmente, Triarylcarboniumpigmente.

Geeignete anorganische Farbpigmente sind anorganische Metallverbindungen wie Metalloxide und -sulfide, die auch mehr als ein Metall enthalten können. Zu diesen anorganischen Pigmenten zählen Titandioxid (C.I. Pigment White 6), Zinkweiß, Farbenzinkoxid; Zinksulfid, Lithopone; Eisenoxidschwarz (C.I. Pigment Black 11), Eisen-Mangan-Schwarz, Spinellschwarz (C.I. Pigment Black 27); Ruß (C.I. Pigment Black 7) als Weiß- beziehungsweise Schwarzpigmente. Als Buntpigmente können verwendet werden Chromoxid, Chromoxidhydratgrün; Chromgrün (C.I. Pigment Green 48); Cobaltgrün (C.I. Pigment Green 50); Ultramaringrün, Kobaltblau (C.I. Pigment Blue 28 und 36; C.I. Pigment Blue 72), Ultramarinblau, Manganblau, Ultramarinviolett, Kobalt- und Manganviolett, Eisenoxidrot (C.I. Pigment Red 101), Cadmiumsulfoselenid (C.I. Pigment Red 108), Cersulfid (C.I. Pigment Red 265), Molybdatrot (C.I. Pigment Red 104), Ultramarinrot, Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb C.I. Pigment Brown 24), Chromorange; Cersulfid (C.I. Pigment Orange 75), Eisenoxidgelb (C.I. Pigment Yellow 42), Nickeltitangelb (C.I. Pigment Yellow 53; C.I. Pigment Yellow 157, 158, 159, 160, 161, 162, 163, 164 und 189), Chromtitangelb, Spinellphasen (C.I. Pigment Yellow 119), Cadmiumsulfid und Cadmiumzinksulfid (C.I. Pigment Yellow 37 und 35); Chromgelb (C.I. Pigment Yellow 34), Bismutvanadat (C.I. Pigment Yellow 184).

Das als Kern A verwendete HDF oder MDF kann auch Glanzpigmente enthalten.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Erfindungsgemäß ist das als Kern A verwendete HDF oder MDF auch mit einem Farbstoff gefärbt. Geeignet sind dabei insbesondere Farbstoffe, die in Wasser oder einem mit Wasser mischbaren oder in Wasser löslichen organischen Lösungsmittel löslich sind. Geeignet sind insbesondere kationische und anionische Farbstoffe, wobei kationische Farbstoffe bevorzugt sind.

Geeignete kationische Farbstoffe entstammen insbesondere der Di- und Triarylmethan-, Xanthen-, Azo-, Cyanin-, Azacyanin-, Methin-, Acridin-, Safranin-, Oxazin-, Indulin-, Nigrosin- und Phenazin-Reihe, wobei Farbstoffe aus der Azo-, Triarylmethan- und Xanthenreihe bevorzugt sind.
Im Einzelnen seien beispielhaft aufgeführt: C.I. Basic Yellow 1, 2 und 37; C.I. Basic Orange 2; C.I. Basic Red 1 und 108; C.I. Basic Blue 1, 7 und 26; C.I. Basic Violet 1, 3, 4, 10, 11 und 49; C.I. Basic Green 1 und 4; C.I. Basic Brown 1 und 4.

Kationische Farbstoffe können auch externe basische Gruppen enthaltende Farbmittel sein. Geeignete Beispiele sind hier C.I. Basic Blue 15 und 161.

Als kationische Farbstoffe können auch die korrespondierenden Farbbasen in Gegenwart von löslich machenden sauren Agenzien eingesetzt werden. Als Beispiele seien genannt: C.I. Solvent Yellow 34; C.I. Solvent Orange 3; C.I. Solvent Red 49; C.I. Solvent Violet 8 und 9; C.I. Solvent Blue 2 und 4; C.I. Solvent Black 7.

Geeignete anionische Farbstoffe sind insbesondere sulfonsäuregruppenhaltige Verbindungen aus der Reihe der Azo-, Anthrachinon-, Metallkomplex-, Triarylmethan-, Xanthen- und Stilbenreihe, wobei Farbstoffe aus der Triarylmethan-, Azo- und Metallkomplex- (vor allem Kupfer-, Chrom- und Kobaltkomplex-) Reihe bevorzugt sind.

Im einzelnen genannt seien beispielsweise: C.I. Acid Yellow 3, 19, 36 und 204; C.I. Acid Orange 7, 8 und 142; C.I. Acid Red 52, 88, 351 und 357; C.I. Acid Violet 17 und 90; C.I. Acid Blue 9, 193 und 199; C.I. Acid Black 194; anionische Chromkomplexfarbstoffe wie C.I. Acid Violet 46, 56, 58 und 65; C.I. Acid Yellow 59; C.I. Acid Orange 44, 74 und 92; C.I. Acid Red 195; C.I. Acid Brown 355 und C.I. Acid Black 52; anionische Kobaltkomplexfarbstoffe wie C.I. Acid Yellow 119 und 204, C.I. Direct Red 80 und 81.

Bevorzugt sind wasserlösliche Farbstoffe.

Als Wasserlöslichkeit vermittelnde Kationen sind dabei insbesondere Alkalimetallkationen, wie Li⁺, Na⁺, K⁺, Ammonium- und substituierte Ammoniumionen, insbesondere Alkanolammoniumionen, zu nennen.

Das als Kern A verwendete HDF oder MDF enthält als farbgebende Komponente mindestens ein Pigment und bezogen auf das Pigment 0,1 bis 10 Gew.-% mindestens eines Farbstoffs.

Bevorzugt weisen die eingesetzten Farbstoffe einen den Pigmenten jeweils vergleichbaren Farbton auf, da auf diese Weise eine besonders intensive Färbung der Holzwerkstoffe erzielbar ist. Es können jedoch auch im Farbton abweichende Farbstoffe eingesetzt werden, wodurch Nuancierungen der Färbung möglich sind.

In einer besonders bevorzugten Ausführungsform der Erfindung werden die für den Kern A der Boden-Paneele verwendeten MDF- und HDF-Platten mittels einer flüssigen Farbmittelzubereitung gefärbt. Diese Farbmittelzubereitung ist in der WO 2004/035276 ausführlich beschrieben. Die Farbmittelzubereitung enthält
i mindestens ein Pigment
ii mindestens einen Farbstoff
iii mindestens ein Dispergiermittel
iv Wasser oder ein Gemisch aus Wasser und mindestens einem Wasserrückhaltemittel und
v gegebenenfalls weitere für Farbmittelzubereitungen übliche Bestandteile.

In der Regel enthalten die zu verwendenden Farbmittelzubereitungen 10 bis 70 Gew.-%, vorzugsweise 10 bis 60 Gew.-% Pigment.

Der Farbstoff ist in der zu verwendenden Farbmittelzubereitung im Allgemeinen in Mengen von 0,1 bis 10 Gew.-%, vorzugsweise 1 bis 8 Gew.-%, jeweils bezogen auf das Pigment vorhanden. Bezogen auf das Gesamtgewicht der Zubereitung entspricht dies Mengen von in der Regel 0,01 bis 7 Gew.-%, vor allem 0,1 bis 5,6 Gew.-%. Die zu verwendenden Farbmittelzubereitungen weisen üblicherweise einen Gehalt an Dispergiermittel von 1 bis 50 Gew.-%, insbesondere von 1 bis 40 Gew.-% auf.

Für die Farbstoffe und Pigmente, die in der Farbmittelzubereitung verwendet werden können, gilt das vorstehend für die erfindungsgemäß zu verwendende Pigmente und Farbstoffe Gesagte.

Besonders geeignete Dispergiermittel sind nichtionische und anionische oberflächenaktive Additive sowie auch Mischungen dieser Additive.

Bevorzugte nichtionische oberflächenaktive Additive basieren insbesondere auf Polyethern.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide geeignet.

Anionische oberflächenaktive Additive basieren insbesondere auf Sulfonaten, Sulfaten, Phosphonaten oder Phosphaten.

Eine weitere wichtige Gruppe anionischer oberflächenaktiver Additive bilden die Sulfonate, Sulfate, Phosphonate und Phosphate der als nichtionische Additive genannten Polyether.

Weitere geeignete anionische oberflächenaktive Additive basieren auf wasserlöslichen carboxylatgruppenhaltigen Polymeren. Diese können durch Einstellung des Verhältnisses zwischen enthaltenen polaren und unpolaren Gruppierungen vorteilhaft an den jeweiligen Anwendungszweck und das jeweilige Pigment angepasst werden.

Wasser bildet das flüssige Trägermaterial der erfindungsgemäß zu verwendenden Farbmittelzubereitungen.

Vorzugsweise enthalten die Farbmittelzubereitungen ein Gemisch von Wasser und einem Wasserrückhaltemittel als flüssige Phase. Als Wasserrückhaltemittel dienen insbesondere organische Lösungsmittel, die schwer verdampfbar sind (d. h. in der Regel einen Siedepunkt > 100°C haben), daher wasserrückhaltend wirken, und in Wasser löslich oder mit Wasser mischbar sind.

Beispiele für geeignete Wasserrückhaltemittel sind mehrwertige Alkohole, bevorzugt unverzweigte und verzweigte mehrwertige Alkohole mit 2 bis 8, insbesondere 3 bis 6, C-Atomen, wie Ethylenglykol, 1,2- und 1,3-Propylenglykol, Glycerin, Erythrit, Pentaerythrit, Pentite, wie Arabit, Adonit und Xylit, und Hexite, wie Sorbit, Mannit und Dulcit. Weiterhin eignen sich z.B. auch Di-, Tri- und Tetraalkylenglykole und deren Mono- (vor allem C₁-C₆-, insbesondere C₁-C₄-)alkylether. Beispielhaft seien Di-, Tri- und Tetraethylenglykol, Diethylenglykolmonomethyl-, -ethyl-, -propyl- und -butylether, Triethylenglykolmonomethyl-, - ethyl-, -propyl- und -butylether, Di-, Tri- und Tetra-1,2- und -1,3-propylenglykol und Di-, Tri-und Tetra-1,2- und -1,3-propylenglykolmonomethyl-, -ethyl-, -propyl- und -butylether genannt.

In der Regel enthalten die erfindungsgemäß zu verwendenden Farbmittelzubereitungen 10 bis 88,95 Gew.-%, vorzugsweise 10 bis 80 Gew.-%, Wasser oder ein Gemisch aus Wasser und Wasserrückhaltemittel. Liegt Wasser im Gemisch mit einem wasserrückhaltenden organischen Lösungsmittel vor, so macht dieses Lösungsmittel im Allgemeinen 1 bis 80 Gew.-%, bevorzugt 1 bis 60 Gew.-%, der Phase aus.

Weiterhin können die Farbmittelzubereitungen noch übliche Zusatzstoffe wie Biozide, Entschäumer, Antiabsetzmittel und Rheologiemodifizierer, enthalten, deren Anteil im Allgemeinen bis zu 5 Gew.-% betragen kann.

Die erfindungsgemäß zu verwendenden Farbmittelzubereitungen können auf verschiedene Weise erhalten werden. Vorzugsweise wird zunächst eine Pigmentdispersion hergestellt, der der Farbstoff dann als Feststoff oder insbesondere in gelöster Form zugegeben wird.

Die Farbmittelzubereitungen eignen sich hervorragend zur Einfärbung von MDF- und HDF-Platten.

Die erfindungsgemäß zu verwendenden Farbmittelzubereitungen können dabei dem als Basis für die MDF- und HDF-Platten dienenden Gemisch aus Holzfasern und Bindemittel auf verschiedene Weise und an verschiedenen Stellen des Fabrikationsprozesses zugesetzt werden.

Bei Verwendung von auf Aminoplasten, wie Harnstoff- und Harnstoff-Melamin-Formaldehydharzen, basierenden Bindemitteln können die Farbmittelzubereitungen zusammen mit dem Bindemittel, das üblicherweise in Form einer weitere Zusatzstoffe - wie Härter und Paraffin-Dispersionen - enthaltenden Dispersion eingesetzt wird, oder getrennt von dem Bindemittel vor oder nach der Beleimung auf die Holzfasern beziehungsweise - späne aufgebracht werden. Beim Einsatz von Isocyanaten (MDI) als Bindemittel werden die Farbmittelzubereitungen getrennt vom Bindemittel eingesetzt. Bei Kombinationsverleimungen mit Aminoplasten und Isocyanaten können die Farbmittelzubereitungen gewünschtenfalls der Aminoplastkomponente zugesetzt werden.

Das als Kern A verwendete HDF oder MDF kann komplett in einem Ton durchgefärbt werden.

Besonders attraktive Farbeffekte sind durch Mischen verschieden gefärbter Fasern und anschließendes Verpressen erzielbar. Hierbei können beispielsweise marmorierte oder gesprenkelte Platten erhalten werden. Besondere Effekte können durch mehrfarbige Einfärbung der Platten erhalten werden. Zum Beispiel können verschieden gefärbte Fasern schichtweise verpresst werden. Solche Effekte lassen sich auch erreichen, wenn nur ein Teil der Fasern eingefärbt wird und der andere Teil seine ursprüngliche Farbe behält.

Weiterhin können durch Einfärbung mit elektrisch leitfähigen Ruß enthaltenden Farbmittelzubereitungen auch elektrisch leitfähige MDF- und HDF-Platten hergestellt werden, die z.B. für elektrisch leitfähige Boden-Paneele von Interesse sind.

Die erfindungsgemäß unter Verwendung von MDF oder HDF hergestellten Boden-Paneele enthalten einen Gegenzug B. Als Gegenzug B können alle dem Fachmann für diesen Zweck bekannte Materialien verwendet werden, beispielsweise kann der Gegenzug B ein mit Melaminharz getränktes Papier sein, das auf die Unterseite der HDF- und MDF-Platten aufgepresst wird.

Gegebenenfalls enthalten die erfindungsgemäß unter Verwendung von MDF oder HDF hergestellten Boden-Paneele eine Schutzschicht C, die auch Overlay genannt wird. Diese Schutzschicht kann ein mit Melaminharz getränktes, transparentes Papier, das auf die Oberseite der MDF- und HDF-Platten gepresst wird, sein. Falls die erfindungsgemäßen Boden-Paneele mit einer Schutzschicht versehen werden, werden der Gegenzug und die Schutzschicht bevorzugt in einem Schritt aufgebracht. Vor oder nach dem Aufbringen des Gegenzugs B und gegebenenfalls der Schutzschicht C kann die Oberfläche beispielsweise mittels Prägen, Embossing, CNC-Verfahren, Stanzen oder Fräsen bearbeitet werden, so dass die Platte eine strukturierte Oberfläche erhält. Auf diese Weise können sogenannte "Living surfaces" erzielt werden, die der Oberfläche von echtem Holz sehr nahe kommen. Auch können vertiefte Fugenprofile eingefräst werden.

Wenn das Boden-Paneel nicht mit einer Schutzschicht in Form eines overlays versehen wird, kann die Oberfläche anderen Oberflächenbehandlungen unterzogen werden. Die Oberfläche kann einfach nur geschliffen, gewachst, geölt, gebeizt, lasiert oder auch lackiert werden. Generell können auch alle aus dem Oberflächenschutz von Parkett bekannten Verfahren und Materialien zur Oberflächenbehandlung der erfindungsgemäßen Fußboden-Paneele eingesetzt werden, beispielsweise UV-härtende Lacke, Pulverlackierungen und sonstige transparente Oberflächenbeschichtungen. Vor der Oberflächenbehandlung kann die Oberfläche eine dreidimensionale Struktur erhalten, beispielsweise mittels Prägen, Embossing, CNC-Verfahren, Stanzen oder Fräsen. In einer weiteren Ausführungsform der Erfindung wird die Oberfläche des Bodenpaneels nur dreidimensional strukturiert und keine weitere Oberflächenbehandlung durchgeführt.

Die erfindungsgemäßen Fußboden-Paneele können noch weitere Schichten enthalten. Beispielsweise kann auf der Unterseite der Fußboden-Paneele noch eine Trittschalldämmung oder eine Wärmedämmung angebracht sein.

Die mit dem Gegenzug B und gegebenenfalls der Schutzschicht C versehenen MDF- und HDF-Platten werden in handelsübliche Maße geteilt und auf einer Längs- und einer Querseite mit einer Nut und auf der jeweils gegenüberliegenden Längs- und Querseite mit einer zu der Nutz passenden Feder versehen. Dies lässt sich beispielsweise mittels Fräsen durchführen.

Gegenstand der Erfindung sind auch die gemäß den Ansprüchen 1 bis 11 hergestellten Fußboden-Paneele sowie Fußbodenbeläge, die die erfindungsgemäßen Fußboden-Paneele enthalten.

### Beispiele

### 1. Herstellung der Farbmittelzubereitungen

Für die Einfärbung der Span- und Faserplatten wurden folgende Farbmittelzubereitungen eingesetzt:

### 1.1. Grüne Farbmittelzubereitung

Es wird eine Mischung aus 25 Gew.-% einer grünen Pigmentzubereitung, die durch Nassmahlung in einer Rührwerkskugelmühle aus
- 40 Gew.-%: C.I. Pigment Green 7
- 8 Gew.-%: eines Blockcopolymers auf Basis Ethylendimin/Propylenoxid/Ethylenoxid mit einem Ethylenoxidgehalt von 40 Gew.-% und einem mittleren Molekulargewicht Mₙ von 6 500
- 15 Gew.-%: Dipropylenglykol
- 37 Gew.-%: Wasser
hergestellt wird, und 7 Gew.-% einer 47 gew.-%igen Lösung von C.I. Basic Green 7 in 48 gew.-%iger Essigsäure und 68 Gew.-% Wasser hergestellt.

### 1.2. Rote Farbmittelzubereitung

Die Mischung wird durch Nassmahlung in einer Rührwerkskugelmühle von
- 26 Gew.-%: C.I. Pigment Red 48:2
- 5 Gew.-%: C.I. Direct Red 80
- 24 Gew.-%: einer 26 gew.-%igen ammoniakalischen Lösung eines Acrylsäure/Styrol- Copolymers mit einer Säurezahl von 216 mg KOH/g und einem mittleren Molekulargewicht Mₙ von 9 200
- 5 Gew.-%: Dipropylenglykol
- 40 Gew.-%: Wasser
erhalten.

### 1.3. Schwarze Farbmittelzubereitung

Es wird eine Mischung aus 94 Gew.-% einer schwarzen Pigmentzubereitung, die durch Nassmahlung in einer Rührwerkskugelmühle aus
- 40 Gew.-%: C.I. Pigment Black 7
- 10 Gew.-%: eines Blockcopolymers auf Basis Ethylendiamin/Propylenoxid/Ethylenoxid mit einem Ethylenoxidgehalt von 40 Gew.-% und einem mittleren Mole- kulargewicht Mₙ von 12 000
- 22 Gew.-%: Dipropylenglykol
- 28 Gew.-%: Wasser
hergestellt wird, und 6 Gew.-% einer 10 gew.-%igen Lösung von C.I. Basic Violet 3 in 30 gew.-%iger Essigsäure hergestellt.

### 1.4. Blaue Farbmittelzubereitung

Es wird eine Mischung aus 90 Gew.-% einer blauen Pigmentzubereitung, die durch Nassmahlung in einer Rührwerkskugelmühle aus
- 40 Gew.-%: C.I. Pigment Blue 15:1
- 8 Gew.-%: eines Blockcopolymers auf Basis Ethylendiamin/Propylenoxid/Ethylenoxid mit einem Ethylenoxidgehalt von 40 Gew.-% und einem mittleren Molekular- gewicht Mₙ von 6 700
- 10 Gew.-%: Dipropylenglykol
- 42 Gew.-%: Wasser
hergestellt wird, und 10 Gew.-% einer 10 gew.-%igen Lösung von C.I. Basic Violet 4 in 30 gew.-%iger Essigsäure hergestellt.

### 1.5. Leitfähige schwarze Farbmittelzubereitung

Es wird eine Mischung aus 98 Gew.-% einer schwarzen Pigmentzubereitung, die durch Nassmahlung in einer Rührwerkskugelmühle aus
- 20 Gew.-%: leitfähigem Ruß
- 10 Gew.-%: eines Blockcopolymers auf Basis Ethylendiamin/Propylenoxid/Ethylenoxid mit einem Ethylenoxidgehalt von 40 Gew.-% und einem mittleren Molekular- gewicht Mₙ von 12 000
- 70 Gew.-%: Wasser
hergestellt wird, und 2 Gew.-% einer 10 gew.-%igen Lösung von C.I. Basic Violet 3 in 30 gew.-%iger Essigsäure hergestellt.

### 2. Herstellung von gefärbten MDF-Platten

Für die Herstellung der MDF-Platten werden, soweit nicht anders angegeben, die in Tabelle 1 und 2 aufgeführten Leimansätze verwendet:

**Tabelle 1**

| | |
|---|---|
| Harnstoff-Melamin-Formaldehyd-harz, 66,5%ig in Wasser | 100,0 Gew.-Teile. |
| Paraffin-Dispersion, 60%ig in Wasser | 4,0 Gew.-Teile. |
| Farbmittelzubereitung und Wasser | 54,3 Gew.-Teile. |
| | |
| Festharzgehalt der Flotte | 42% |
| Festharz/atro Fasern | 14% |
| Flotte auf 100 kg atro Fasern | 33,3 kg |

**Tabelle 2**

| | |
|---|---|
| Harnstoff-Melamin-Formaldehyd-harz, 66,5%ig in Wasser | 100,0 Gew.-Teile. |
| Paraffin-Dispersion, 60%ig in Wasser | 4,0 Gew.-Teile. |
| Farbmittelzubereitung Nr. 1.5 | 19,0 Gew.-Teile. |
| Wasser | 35,3 Gew.-Teile. |
| | |
| Festharzgehalt der Flotte | 42% |
| Festharz/atro Fasern | 14% |
| Flotte auf 100 kg atro Fasern | 33,3 kg |

### 2.1. Herstellung einer schwarz gefärbten MDF-Platte

Dem Leimansatz aus Tabelle 1 werden 19,0 Gew.-Teile. der Farbmittelzubereitung Nr. 1.3 zugegeben.

Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Schwarzfärbung.

### 2.2. Herstellung einer schwarz gefärbten, isocyanatgebundenen MDF-Platte

Die Fasern werden mit 3,5 Gew.-% Isocyanat (MDI), das unmittelbar vor der Beleimung in Wasser (Gew.-Verhältnis 1:1) emulgiert wurde, beleimt. Getrennt davon werden den Fasern 4 Gew.-% der Farbmittelzubereitung Nr. 1.3 und 0,8 Gew.-% der Paraffin-Dispersion zugemischt.
Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Schwarzfärbung.

### 2.3. Herstellung einer blau gefärbten MDF-Platte

Dem Leimansatz aus Tabelle 1 werden 4,7 Gew.-Teile. der Farbmittelzubereitung Nr. 1.4 zugegeben.

Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Blaufärbung.

### 2.4. Herstellung einer rot gefärbten MDF-Platte

Dem Leimansatz aus Tabelle 1 werden 4,7 Gew.-Teile. der Farbmittelzubereitung Nr. 1.2 zugegeben.

Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Rotfärbung.

### 2.5. Herstellung einer grün gefärbten MDF-Platte

Dem Leimansatz aus Tabelle 1 werden 2,4 Gew.-Teile. der Farbmittelzubereitung Nr. 1.1 zugegeben.
Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Grünfärbung.

### 2.6. Herstellung einer blau-schwarz-marmorierten MDF-Platte

Analog zu 1.1 und 1.3 beleimte und getrocknete Fasern werden im Schaufelmischer im Gewichtsverhältnis Blau : Schwarz = 3 : 1 gemischt, dann zu einer Matte geschüttet, vorverdichtet und bei 220°C zu einer Platte gepresst.

Die erhaltene MDF-Platte zeigt eine blau-schwarze Marmorierung.

### 2.7. Herstellung einer schichtweise blau-schwarz eingefärbten MDF-Platte

Analog zu 2.3 beleimte und getrocknete blau gefärbte Späne werden zu einer Matte geschüttet und kalt vorverdichtet. Darauf werden analog zu 2.1 beleimte und getrocknete schwarz gefärbte Fasern geschüttet und ebenfalls vorverdichtet. Die Matten werden dann bei 220°C zu einer Platte gepresst.

Die erhaltene MDF-Platte zeigt auf der einen Seite eine homogene, brillante Blaufärbung und auf der anderen Seite eine homogene, brillante Schwarzfärbung.

### 2.8. Herstellung einer blau-schwarz-marmorierten MDF-Platte

Analog zu 2.1 und 2.3 beleimte und getrocknete Fasern werden im Schaufelmischer im Gewichtsverhältnis Blau : Schwarz = 3 : 1 gemischt, dann zu einer Matte geschüttet, vorverdichtet und bei 220°C zu einer Platte gepresst.

Die erhaltene MDF-Platte zeigt eine blau-schwarze Marmorierung.

### 2.9. Herstellung einer blau-grün-rot-marmorierten MDF-Platte

Analog zu 2.3, 2.4 und 2.5 beleimte und getrocknete Fasern werden im Schaufelmischer im Gewichtsverhältnis Blau : Grün : Rot = 1 : 1 : 1 gemischt, dann zu einer Matte geschüttet, vorverdichtet und bei 220°C zu einer Platte gepresst.

Die erhaltene MDF-Platte zeigt eine blau-grün-rote Marmorierung.

### 2.10. Herstellung einer schwarz gefärbten, leitfähigen MDF-Platte

Es wird der Leimansatz aus Tabelle 2 verwendet.

Die beleimten Fasern werden anschließend in einem Trockner auf eine Feuchte von ca. 8 Gew.-% getrocknet, zu einer Matte geschüttet, vorverdichtet und bei 220°C zu einer Platte gepresst.

Die erhaltene MDF-Platte zeigt eine homogene, brillante, lichtechte Schwarzfärbung und hatte einen Oberflächenwiderstand von 1,3 x 10⁵ Ωcm. **3.**

Um die nach den Beispielen 1 und 2 hergestellten gefärbten MDF-Platten mit einem Gegenzug zu versehen, wird Papier mit einem Gewicht von 90 bis 110 g/m² mit einer 55 gew.-%igen wässrigen Lösung von Melamin-Formaldehydharz mit einem molekularen Verhältnis von Melamin : Formaldehyd von 1 : 1,6 getränkt, auf die Unterseite der nach den Beispielen 1 und 2 hergestellten gefärbten MDF-Platten aufgebracht und bei 190 °C und 20 bar für 20 Sekunden heiß verpresst.

Anschließend werden die mit einem Gegenzug versehenen Platten in Rechtecke von ca. 10 cm x 15 cm geteilt und an zwei nebeneinanderliegenden Kanten jeweils eine Nut und in die dazu gegenüberliegenden Kanten die dazu passenden Federn eingefräst.

## Patentansprüche

1. Verwendung von HDF oder MDF zur Herstellung eines Fußboden-Paneels, das an einer Längs- und einer Querseite mit einer Nut und an der jeweils gegenüberliegenden Längs- und Querseite mit einer zu der Nut passenden Feder versehen ist, enthaltend
A einen Kern aus HDF oder MDF, der mindestens ein Pigment und bezogen auf das Pigment 0,5 bis 10 Gew.-% mindestens eines Farbstoffs enthält, und
B eine Gegenzugschicht auf der Unterseite,
wobei das Vorhandensein einer Dekorschicht, die dem Fußboden-Paneel in Form eines bedruckten oder gefärbten Papiers oder Beschichtungswerkstoffes oder durch vollständiges Bedrucken zugefügt wird, ausgeschlossen ist.

2. Verwendung von HDF oder MDF gemäß Anspruch 1, wobei das Vorhandensein jeglicher Dekorschicht ausgeschlossen ist.

3. Verwendung von HDF oder MDF gemäß einem der Ansprüche 1 oder 2, **dadurch gekennzeichnet, dass** das Fußbodenpaneel eine transparente Schutzschicht C auf der Oberseite enthält.

4. Verwendung von HDF oder MDF gemäß einem der Ansprüche 1 bis 3, **dadurch gekennzeichnet, dass** der Kern A 0,001 bis 20 Gew.-% mindestens einer farbgebenden Komponente enthält, bezogen auf das Gewicht der absolut trockenen Fasern.

5. Verwendung von HDF oder MDF gemäß einem der Ansprüche 1 bis 4, **dadurch gekennzeichnet, dass** der Kern A mit Hilfe einer Farbmittelzubereitung gefärbt wird, enthaltend
i mindestens ein Pigment
ii mindestens einen Farbstoff
iii mindestens ein Dispergiermittel
iv Wasser oder ein Gemisch aus Wasser und mindestens einem Wasserrückhaltemittel und
v gegebenenfalls weitere für Farbmittelzubereitungen übliche Bestandteile.

6. Verwendung von HDF oder MDF gemäß einem der Ansprüche 1 bis 5, **dadurch gekennzeichnet, dass** der Kern A aus HDF mit einer Dichte von 800 bis 1100 kg/m³ besteht.

7. Verwendung von HDF oder MDF gemäß einem der Ansprüche 1 bis 6, **dadurch gekennzeichnet, dass** das Fußboden-Paneel eine dreidimensionale Oberflächenstruktur erhalten hat.

8. Verwendung von HDF oder MDF gemäß einem der Ansprüche 1 bis 7, **dadurch gekennzeichnet, dass** das Fußboden-Paneel eine Gegenzugschicht B in Form eines mit Harz getränkten Papiers enthält

9. Verwendung von HDF oder MDF gemäß einem der Ansprüche 1 bis 8, **dadurch gekennzeichnet, dass** das Fußboden-Paneel eine Schutzschicht C in Form eines mit Harz getränkten, durchsichtigen Papiers enthält.

10. Verwendung von HDF oder MDF gemäß einem der Ansprüche 1 bis 9, **dadurch gekennzeichnet, dass** das Fußboden-Paneel einer Oberflächenbehandlung unterzogen wird.

11. Fußboden-Paneel gemäß einem der Ansprüche 1 bis 10.

12. Fußbodenbelag enthaltend Fußboden-Paneele gemäß Anspruch 11.

## Claims

1. The use of HDF or MDF for the production of a floor panel which is provided with a groove on a longitudinal side and a transverse side and with a tongue fitting the groove on the respective opposite longitudinal side and transverse side, comprising
A a core of HDF or MDF which comprises at least one pigment and, based on the pigment, from 0.5 to 10% by weight of at least one dye, and
B a backing layer on the bottom,
the presence of a decorative layer which is added to the floor panel in the form of a printed or colored paper or coating material or by complete printing being ruled out.

2. The use of HDF or MDF according to claim 1, the presence of any decorative layer being ruled out.

3. The use of HDF or MDF according to either of claims 1 and 2, wherein the floor panel comprises a transparent protective layer C on the top.

4. The use of HDF or MDF according to any of claims 1 to 3, wherein the core A comprises from 0.001 to 20% by weight of at least one color-imparting component, based on the weight of the absolutely dry fibers.

5. The use of HDF or MDF according to any of claims 1 to 4, wherein the core A is colored with the aid of a colorant formulation comprising
i at least one pigment
ii at least one dye
iii at least one dispersant
iv water or a mixture of water and at least one water retention agent and
v if appropriate, further constituents customary for colorant formulations.

6. The use of HDF or MDF according to any of claims 1 to 5, wherein the core A consists of HDF having a density of from 800 to 1100 kg/m³.

7. The use of HDF or MDF according to any of claims 1 to 6, wherein the floor panel has acquired a three-dimensional surface structure.

8. The use of HDF or MDF according to any of claims 1 to 7, wherein the floor panel comprises a backing layer B in the form of a paper impregnated with resin.

9. The use of HDF or MDF according to any of claims 1 to 8, wherein the floor panel comprises a protective layer C in the form of a transparent paper impregnated with resin.

10. The use of HDF or MDF according to any of claims 1 to 9, wherein the floor panel is subjected to a surface treatment.

11. The floor panel according to any of claims 1 to 10.

12. A floor covering comprising floor panels according to claim 11.

## Revendications

1. Utilisation d'HDF ou de MDF pour la fabrication d'un panneau de plancher, qui est muni d'une rainure sur un côté longitudinal et sur un côté transversal, et d'un ressort assorti à la rainure sur le côté longitudinal et le côté transversal à chaque fois opposé, contenant
A un noyau en HDF ou MDF, qui contient au moins un pigment et, par rapport au pigment, 0,5 à 10 % en poids d'au moins un colorant, et
B une couche de contre-traction sur le côté inférieur,
la présence d'une couche de décoration, ajoutée au panneau de plancher sous la forme d'un matériau de revêtement ou d'un papier imprimé ou coloré ou par impression intégrale, étant exclue.

2. Utilisation d'HDF ou de MDF selon la revendication 1, dans laquelle la présence de toute couche de décoration est exclue.

3. Utilisation d'HDF ou de MDF selon l'une quelconque des revendications 1 ou 2, **caractérisée en ce que** le panneau de plancher contient une couche protectrice transparente C sur le côté supérieur.

4. Utilisation d'HDF ou de MDF selon l'une quelconque des revendications 1 à 3, **caractérisée en ce que** le noyau A contient 0,001 à 20 % en poids d'au moins un composant colorant, par rapport au poids des fibres complètement sèches.

5. Utilisation d'HDF ou de MDF selon l'une quelconque des revendications 1 à 4, **caractérisée en ce que** le noyau A est coloré à l'aide d'une préparation colorante, contenant
i au moins un pigment
ii au moins un colorant
iii au moins un agent de dispersion
iv de l'eau ou un mélange d'eau et d'au moins un agent de rétention de l'eau et
v éventuellement d'autres constituants usuels pour les préparations colorantes.

6. Utilisation d'HDF ou de MDF selon l'une quelconque des revendications 1 à 5, **caractérisée en ce que** le noyau A est constitué d'HDF d'une densité de 800 à 1 100 kg/m³.

7. Utilisation d'HDF ou de MDF selon l'une quelconque des revendications 1 à 6, **caractérisée en ce que** le panneau de plancher présente une structure de surface tridimensionnelle.

8. Utilisation d'HDF ou de MDF selon l'une quelconque des revendications 1 à 7, **caractérisée en ce que** le panneau de plancher contient une couche de contre-traction B sous la forme d'un papier imprégné de résine.

9. Utilisation d'HDF ou de MDF selon l'une quelconque des revendications 1 à 8, **caractérisée en ce que** le panneau de plancher contient une couche protectrice C sous la forme d'un papier transparent imprégné de résine.

10. Utilisation d'HDF ou de MDF selon l'une quelconque des revendications 1 à 9, **caractérisée en ce que** le panneau de plancher est soumis à un traitement de surface.

11. Panneau de plancher selon l'une quelconque des revendications 1 à 10.

12. Revêtement de plancher contenant des panneaux de plancher selon la revendication 11.
